(19) **Europäisches Patentamt**

**European Patent Office**

**Office européen des brevets**

(11) **EP 1 085 447 B1**

(12) **FASCICULE DE BREVET EUROPEEN**

(45) Date de publication et mention
de la délivrance du brevet:
**18.10.2006 Bulletin 2006/42**

(51) Int Cl.:
*G06F 19/00* (2006.01)     *G06F 1/00* (2006.01)

(21) Numéro de dépôt: **00402355.2**

(22) Date de dépôt: **24.08.2000**

(54) **Procédé et dispositif de résolution de modèles et ultisation pour la détection des attaques contre les systèmes informatiques**

Verfahren und Vorrichtung zur Modellzerlegung und Benutzung davon zur Detektierung der Angriffe gegen die Informatiksysteme

Method and device for model-solving and utilisation thereof for the detection of attacks against information processing systems

(84) Etats contractants désignés:
**AT BE CH CY DE DK ES FI FR GB GR IE IT LI LU MC NL PT SE**

(30) Priorité: **13.09.1999 FR 9911716**

(43) Date de publication de la demande:
**21.03.2001 Bulletin 2001/12**

(73) Titulaire: **BULL SAS**
**78340 Les Clayes sous Bois (FR)**

(72) Inventeurs:
• **Roger, Muriel**
**75013 Paris (FR)**
• **Goubault-Larrecq, Jean**
**92110 Clichy (FR)**

(74) Mandataire: **Debay, Yves**
**Cabinet Debay,**
**126 Elysée 2**
**78170 La Celle Saint Cloud (FR)**

(56) Documents cités:
**FR-A- 2 706 652        US-A- 5 694 590**

• **TERRAN LANE, CARLA E. BRODLEY: "Sequence matching and learning in anomaly detection for computer security" AAAI WORKSHOP: AI APPROACHES TO FRAUD DETECTION AND RISK MANAGEMENT, XP002142494 Purdue University, West Lafayette**
• **R.J. HAYTON, J.M. BACON, K. MOODY: "Access control in an open distributed environment" SECURITY AND PRIVACY, 1998. PROCEEDINGS 1998 IEEE SYMPOSIUM, XP002142495**
• **GHICA VAN EMDE BOAS-LUBSEN, PETER VAN EMDE BOAS: "Compiling Horn-clause rules in IBM's Business System 12 and early experiment in declarativeness " 1998 SILVER JUBILEE SOFSEM MEETING, XP002142496 Slovakia**

**Description**

La présente invention concerne un procédé et dispositif de résolution de modèles et son utilisation pour la détection des attaques contre les systèmes informatiques.

Les systèmes informatiques sécurisés peuvent être soumis à des attaques ou tentatives d'introduction frauduleuse. En général, on essaie de parer à ces attaques en établissant des fichiers compte-rendu, par exemple, des fichiers compte-rendu système (log system) ou des fichiers compte-rendu réseau (log réseau) et en effectuant des filtrages sur ces fichiers pour détecter un incident ou une intrusion. Les systèmes qui font de l'audit de fichiers de compte-rendu reposent généralement sur une méthode compliquée qui pose des problèmes à l'écriture et, de plus, l'audit résultant est difficile à lire. Le document FR 2 706 652 décrit ainsi un type de dispositif permettant de détecter les intrusions selon une méthode complexe. Par ailleurs, lorsque l'intrusion se fait en plusieurs étapes successives non concomitantes, le système peut très bien ne pas la détecter. Par ailleurs, l'écriture des conditions d'audit est peu souple, peu modifiable et pose des problèmes de modularité. Ainsi, dans la plupart des systèmes fonctionnant à l'aide de règles il est nécessaire de décrire les conditions d'audit sous forme de programmes décrivant les déclenchements de règles conditionnés par des événements ; par exemple, pour décrire une condition d'audit spécifiant une étape A, suivie quelque temps plus tard de B, suivie quelque temps plus tard de C, il faudra décrire des règles d'attente de l'étape A, qui en cas de succès devront déclencher des règles d'attente de l'étape B, qui en cas de succès devront déclencher des règles d'attente de l'étape C. Cette façon de décrire la suite A, B, C est lourde, est cause d'erreurs difficiles à détecter par une simple lecture. Enfin, certains systèmes connus nécessitent de balayer plusieurs fois les fichiers compte-rendu.

Un but de l'invention est donc de proposer un procédé performant de résolution de spécifications.

Ce but est atteint par le procédé performant de résolution de spécifications selon la revendication 1.

Un autre but est de permettre une grande flexibilité.

Ce but est atteint par le procédé selon la revendication 2.

Des développements supplémentaires de l'invention sont décrits dans les revendications 3 à 6.

Un autre but est de proposer un dispositif permettant la mise en oeuvre du procédé.

Ce but est atteint par le dispositif performant de résolution d'une spécification selon la revendication 7.

D'autres particularités et avantages de la présente invention apparaîtront plus clairement à la lecture de la description ci-après faite en référence aux dessins annexés dans lesquels :

- la figure 1 représente une vue schématique des éléments matériels et logiciels permettant la mise en oeuvre du procédé.
- la figure 2 représente le contenu de la table, des compteurs de formules ou sous-formules présentes dans les parties négatives des clauses, et de la pile, et leur évolution au cours de la mise en oeuvre du procédé.

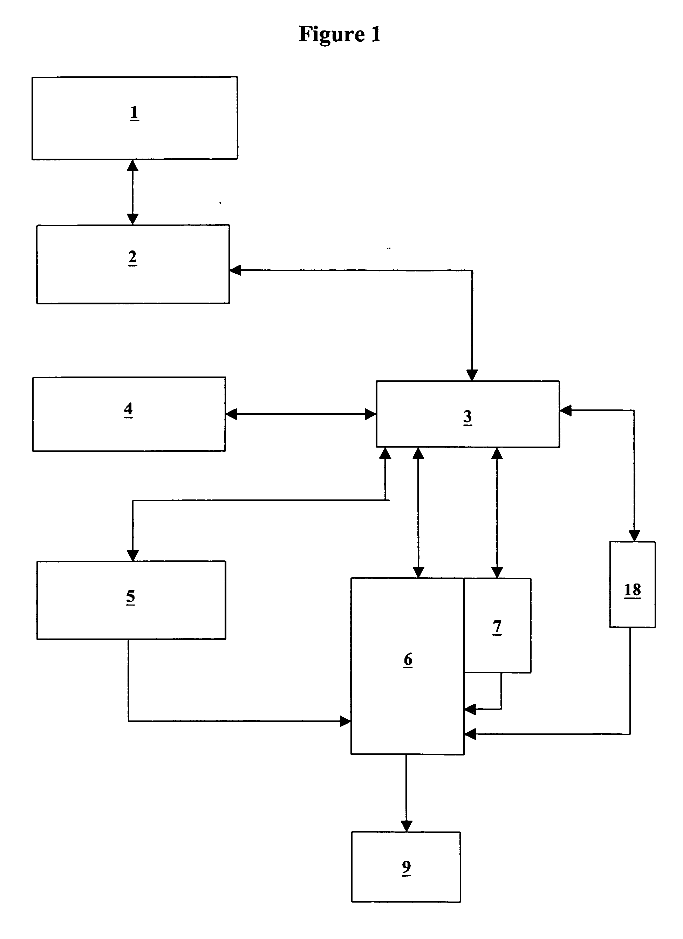

La figure 1 représente les éléments nécessaires à la mise en oeuvre du procédé selon l'invention. Le fichier compte-rendu (1) est généralement présent sur toutes les machines et peut être le fichier compte-rendu réseau lorsque la machine est connectée à un réseau, ou un fichier compte-rendu système ou tout autre fichier sur lequel on veut vérifier une spécification. Par machine, il faut entendre un ordinateur comportant des moyens de mémorisation, des moyens de lire et d'exécuter un programme et des moyens interactifs avec un utilisateur (par exemple écran, clavier, souris) et des moyens de connexion au réseau. Ce fichier communique avec un adaptateur (2) qui est un logiciel permettant de traduire les informations contenues dans le fichier compte-rendu et exprimées dans le langage spécifique à la machine en un langage évolué compréhensible par un interpréteur (3). L'interpréteur (3) reçoit également d'un module (4) la formule de la spécification à vérifier exprimée dans une logique temporelle. Cet interpréteur (3) réalise l'expansion de la formule en sous-formules et le balayage de chaque enregistrement Ei (Annexe 2) du fichier compte-rendu (1) pour générer, à l'aide de cette expansion et de ce balayage, un tableau et une pile résultants exprimant des clauses de Horn mémorisées dans une mémoire (5). La notion de clause de Horn est bien connue de l'homme du métier, et est décrite par exemple dans (Goubault-Larrecq, Jean et Mackie, Ian, Proof Theory and Automated Deduction, édité par Kluwer, 1996). Ce tableau et cette pile sont exploités par un algorithme (6) de traitement de clauses qui reçoit un ordre de lancement de l'interpréteur (3) une fois que ce dernier a rempli le tableau (5) contenant une table de compteurs (7), ainsi qu'une pile (18), après avoir parcouru tous les enregistrements Ei du fichier. Cet algorithme va chercher la résolution de la spécification par rapport à l'ensemble des enregistrements. Lors de la détection du balayage complet du fichier d'enregistrement (1), l'algorithme de traitement de clauses génère, soit un fichier de sortie, soit une action du système ou de la machine.

Selon une optimisation du procédé selon l'invention, la phase de remplissage du tableau (6) et de la pile (18) et la phase de traitement de clauses sont effectuées de façon concomitantes, de sorte que l'algorithme de traitement de clauses puisse générer le fichier de sortie ou l'action du système ou de la machine au plus tôt, et en général avant la détection du balayage complet du fichier d'enregistrement (1).

Pour mieux comprendre le procédé mis en oeuvre, celui-ci va être explicité à l'aide d'un exemple dont les formules figureront en annexe à la fin de la description. Tout d'abord, un fichier de compte-rendu (log) est une suite d'enregistrements E = (E1, ..., EN) telle que représentée à l'annexe 2. Chaque enregistrement Ei comporte un certain nombre d'informations telles que la date, l'opération concernée, la machine, un résultat, un sujet, cette liste n'étant pas limitative.

Ainsi E1 signale que l'utilisateur machin a tenté de se connecter mais a échoué.

Pour formuler une spécification, telle que celle représentée à l'annexe 1, que l'on veut détecter ou résoudre, on utilise une formule de spécification dans une logique temporelle. Cette formule est décrite selon la production **formule** suivante de la grammaire en format BNF bien connu de l'homme du métier (Aho, Alfred V. et Sethi, Ravi et Ullman, Jeffrey D., Compilers : Principles, Techniques and Tools, Addison-Wesley, 1986) :

**formule** : : = atome

| formule ∧ formule

| formule ∨ formule

| formule U formule

| formule W formule

**atome** : : = record

  | (formule)

  |¬ atome

  |O atome, la ligne suivante existe et à la ligne suivante, l'atome est vrai

  |Õ atome, si la ligne suivante existe alors à la ligne suivante, l'atome est vrai

  |◊ atome, il existe une ligne, soit la ligne courante, soit une ligne ultérieure, l'atome est vrai

  | atome, pour toutes les lignes à partir de la ligne courante, l'atome est vrai

Les opérateurs entre formules sont l'opérateur « ∧ » pour exprimer un « ET » logique, « ∨ » pour exprimer un « OU » logique, « U » pour exprimer la formulation jusqu'à (until), « W » pour exprimer la formulation (Waiting-for) en attente de, « O » pour exprimer la formulation à la ligne suivante, qui existe, « Õ » pour exprimer la formulation à la ligne suivante, si elle existe, «◊» pour exprimer la formulation à la ligne courante ou à une ligne ultérieure , « » pour exprimer la formulation à la ligne courante et à toute ligne ultérieure. Cette notation est bien connue de l'homme du métier, voir par exemple (Manna, Zohar et Pnueli, Amir, The Temporal Logic of Reactive and Concurrent Systems Specification, Springer, 1992). Ainsi, la formulation temporelle F = F1 W F2 permet une formulation aisée d'une spécification à vérifier.

Supposons que l'opérateur ait introduit, grâce à une interface (4) homme-machine permettant la génération de formule temporelle, une formule temporelle telle que celle figurant en annexe 1.

L'interface (4) va traduire cette formule de l'annexe 1 en une formule temporelle où F et H sont des formules atomiques dans lesquelles F représente {op = « connection », result = « failed », ...} et H représente {op = « connection », result = « success », ...}. Par ailleurs, nous supposons que le fichier de compte-rendu (1) contient les enregistrements E1 à E3 représentés en annexe 2.

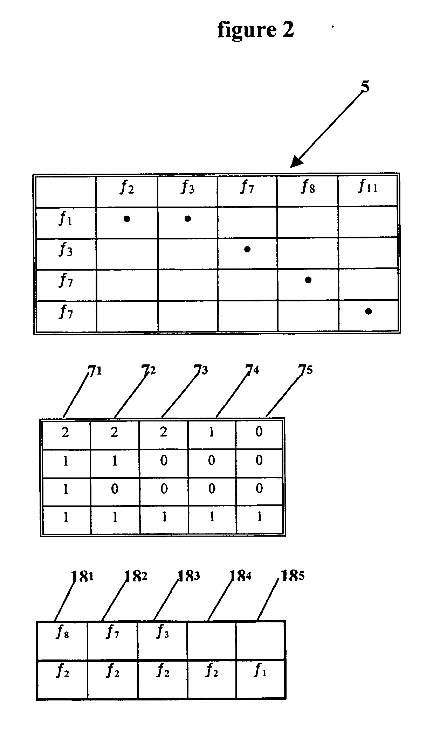

Dans un premier temps, l'interpréteur (3) procède à l'expansion de la formule pour chaque enregistrement E1, E2, E3, comme représenté à l'annexe 6, en générant des sous-formules pour chaque enregistrement afin d'en déduire des clauses de Horn qui rendent compte des implications logiques qui existent entre une formule et ses sous-formules et de la possibilité de satisfaire les formules atomiques, comme représenté à l'annexe 6. Ainsi pour l'enregistrement E1, la formule est expansée en la sous-formule F à laquelle correspond la clause ($f_2$), en la sous-formule ◊H à laquelle correspond la clause $(f_2) \wedge (f_3) \rightarrow (f_1)$, etc. L'interpréteur (3) comporte une procédure d'optimisation qui permet de supprimer les redondances et les étapes inutiles du tableau de l'annexe 6 et après optimisation, l'interpréteur retiendra uniquement les clauses engendrées correspondant au tableau de l'annexe 7. Pour faciliter la compréhension du tableau de l'annexe 7 ou du tableau de l'annexe 6, la notation $\diamond H$ signifie : « il existe une ligne, soit la ligne courante de l'enregistrement, soit une ligne ultérieure où la formule H est vérifiée » ; pour vérifier si F A $\diamond H$ est vraie à l'enregistrement E1, on numérote les couples (formule, enregistrement) appelés configurations, dans l'exemple le couple $(F \wedge \diamond H, E1)$ est numéroté (1). L'interpréteur (3) expanse la formule F $\wedge$ OH à l'enregistrement E1 en les formules F et $\diamond H$. Le couple (F, E1) est numéroté $f_2$, le couple $(\diamond H, E1)$ est numéroté $f_3$, et l'interpréteur génère la clause $(f_2) \wedge (f_3) \rightarrow (f_1)$, qui exprime que si la configuration $f_2$ et la configuration $f_3$ sont vérifiées alors la configuration $f_1$ est vérifiée, c'est-à-dire que F est vérifiée à l'enregistrement E1. O($\diamond H$) signifie : « la ligne d'enregistrement suivante existe et à la ligne suivante $\diamond H$ est vraie », ceci correspond à la configuration $f_6$ pour le premier enregistrement. La formule HVO($\diamond H$) signifie « H est vrai ou la ligne d'enregistrement suivante existe et à la ligne suivante, il existe une ligne, soit la ligne courante, soit une ligne ultérieure où H est vrai », ceci correspond aux configurations $(f_4)$ pour l'enregistrement E1, $(f_9)$ et $(f_{14})$ pour l'enregistrement E2 et $(f_{19})$, $(f_{23})$ et $(f_{28})$ pour l'enregistrement E3. L'ensemble des clauses de Horn figurant dans la partie droite du tableau de l'annexe 7 est stocké dans la table (5), dans le compteur (7) et dans la pile (18) représentés figure 2 de la façon suivante. Les colonnes de la table (5) sont indexées par les indices $(f_2)$, $(f_3)$, $(f_4)$, $(f_5)$, $(f_6)$, $(f_8)$, $(f_{11})$, $(f_{12})$ des formules apparaissant dans la partie négative de la clause. Seuls les indices impliquant une conclusion sont conservés. Les lignes de la table (5) sont indexées par les indices $(f_1)$, $(f_3)$, $(f_7)$ des formules apparaissant dans la partie positive de la clause. La partie négative de la clause est la partie située à gauche de la flèche d'implication que l'on appellera par la suite la ou les sous-formules impliquantes. La partie positive est à droite de la flèche et sera appelée la formule impliquée. Cette représentation n'est pas limitative et la représentation sous forme de matrice creuse, les colonnes étant représentées au moyen de listes chaînées et les lignes demeurant implicites, est préférée Toutefois pour bien comprendre l'invention celle-ci va être expliquée à l'aide des notations de la figure 2. Pour bien comprendre la notation du tableau 7, la clause $(f_2) \wedge (f_3) \rightarrow (f_1)$ signifie que si la configuration $f_2$ est vérifiée et la configuration $f_3$ est vérifiée alors la configuration $f_1$ est vérifiée. La clause $f_7 \rightarrow f_3$ signifie que si la configuration $f_7$ est vérifiée alors la configuration $f_3$ aussi. Par ailleurs, au cours de l'expansion des formules par l'interpréteur (3), celui-ci a stocké dans une pile (18) les clauses positives correspondant aux formules qui peuvent être satisfaites. Ainsi à la fin de l'expansion, les formules $f_2$ et $f_8$ sont dans la pile $(18_1)$, comme représenté à la figure 2, et la table des compteurs de littéraux négatifs des clauses du tableau est constituée des informations représentées par la référence $(7_1)$ sur cette figure. Dans la phase de résolution, l'algorithme de traitement de clauses (6), lorsqu'il est lancé par l'interpréteur une fois que celui-ci a rempli les tables (5, 7 et 18) après avoir examiné les lignes d'enregistrements du fichier compte-rendu, va commencer par examiner le dessus de la pile (18) et en extraire l'information que la configuration $f_8$, en l'occurrence, est satisfaite. L'algorithme examine ensuite dans la table (5) les clauses qui ont cette configuration en partie négative, en l'occurrence la configuration $f_7$, et en déduit le compteur qu'il doit décrémenter. Le compteur $(7_2)$ représente l'évolution dans le compteur $(7_1)$ du compteur qui est associé à la formule représentée dans la partie positive. L'algorithme décrémente le compteur correspondant, en l'occurrence celui de la configuration $f_7$, et met dans le haut de la pile la valeur « 7 » de la configuration qui est vraie, comme représenté dans la case $(18_2)$ qui représente l'évolution de la pile (18) alors que la colonne $(7_2)$ représente l'évolution du compteur. Puis l'algorithme de résolution des clauses va procéder par itération en recherchant les clauses qui ont la configuration $f_7$ en partie négative pour en déduire que la configuration $f_3$ est vraie et décrémenter le compteur correspondant à cette ligne de configurations, comme représenté dans la colonne $(7_3)$. L'algorithme (6) continue ainsi jusqu'à ce que la pile (18) soit vide ou contienne des configurations déjà traitées et l'on obtient dans la pile $(18_5)$ la seule configuration $f_1$ qui vérifie la spécification.

L'algorithme d'expansion évite de répliquer inutilement des configurations identiques, représentées par leur pointeur en mettant en place une table de hachage. La structure de données de table de hachage et les algorithmes associés sont bien connus de l'homme du métier, voir par exemple (Knuth, Donald Erwin, The Art of Computer Programming, vol. 3, Sorting and Searching, Addison-Wesley, seconde édition, 1998).

Par ailleurs, on peut également effectuer des optimisations liées à l'expansion des formules, de façon à éviter plusieurs étapes. Ainsi au lieu d'expanser la formule OF en FVO($\diamond F$) puis en F et O($\diamond F$) et ensuite en $\diamond F$ à l'état suivant, on l'expanse directement en F et en OF à l'état suivant. De même, lorsqu'on a une formule du type F $\wedge$ G où soit F, soit G peut être évalué à l'état courant en faux, on arrête l'expansion de la formule. La méthode développée par l'invention, présente un avantage par rapport à la méthode connue de l'art antérieur où l'on établit dans un premier temps, une table de vérité de chaque formule atomique telle que celle représentée en annexe 4 puis dans un deuxième temps, on établit les tables de vérité (annexe 5) des sous-formules non atomiques à l'aide de la table de vérité de l'annexe 4. La vérification de modèles se fait ensuite en deux temps. Tout d'abord on vérifie que les formules atomiques sont vraies ou fausses, ce qui oblige pour chaque formule un parcours des états puis, dans un second temps, pour établir les vérités des sous-formules on est contraint de regarder pour chaque formule atomique comment elle se comporte dans chaque état, ce qui revient à faire plusieurs parcours des enregistrements. Cela reviendrait à faire des retours en arrière dans le fichier de compte-rendu avec toutes les opérations de lecture et de positionnement qui s'en suivent, ce qui, étant donné la grande taille d'un fichier de compte-rendu, peut être très coûteux en temps. La méthode développée par l'invention est beaucoup plus performante et économe même en taille et mémoire pour mémoriser les états intermédiaires.

Pour permettre une meilleure compréhension de l'algorithme, nous allons le décrire brièvement, puis nous le présenterons de manière formelle.

On considère $F_S$, le fichier de spécification, comme une suite finie de formules $F_S$ dont la syntaxe et la sémantique sont définies plus haut. Notons $F$ l'ensemble de toutes les formules dont la syntaxe et la sémantique sont définies plus haut. $(R_1,..., R_{|N|})$ (avec N égal au nombre d'enregistrements dans le fichier) le fichier de logs$_A$. Les fichiers de logs sont des fichiers de compte-rendu de tout ce qui se passe dans un système (par exemple, un fichier retraçant les connexions et les déconnexions des utilisateurs sur les machines). Un enregistrement (record) est une fonction $R$ de domaine et codomaine finis de $\Sigma^*$ vers $\Sigma^*$, où l'ensemble des chaînes de caractères

$$R : \Sigma^* \rightarrow \Sigma^*.$$

Notons respectivement $dom(R)$ et $codom(R)$ pour le domaine de $R$ et le codomaine de $R$.

Exemple 1 (record) Considérons l'enregistrement $R$ d'un fichier de logs :

Date = 27 : 02 : 2000, operation = connection, machine = papillon, resultat = succès, sujet = Machin
on aura alors : $dom(R)$ = {date, operation, machine, resultat, sujet]}
où $dom(R)$ est le domaine et $codom$ le codomaine
$codom(R)$ = {27 : 02 : 2000, connection, papillon, succes, Machin} et
$R$: $\Sigma^* \rightarrow \Sigma^*$
date$\rightarrow$ 27 : 02: 2000
opération$\rightarrow$ connection
machine$\rightarrow$ papillon
resultat$\rightarrow$ succes
sujet$\rightarrow$ Machin.

Un fichier de logs est donc une suite (finie) d'enregistrements $R_1$, ..., $R_{|N|}$.

Soit « *Current* » et « *Next* », des ensembles de représentations de formules (dans la suite de la description, on dira "formule" pour "représentation de formule") ; *Current* est l'ensemble des formules à examiner à l'état courant, et *Next* est l'ensemble des formules qu'il faudra examiner à l'état suivant.

A chaque état, l'ensemble « *Current* » est l'union de l'ensemble *« Next »* et des formules $F_S$ associées à l'état courant. C'est ce que dit l'étape 2 de l'algorithme.

L'état courant est représenté par l'entier *i,* $1 \leq i \leq |N|$.

On parcourt en une fois le fichier de compte-rendu « logs », et pendant ce parcours, à chaque état, c'est-à-dire à chaque enregistrement (record) du fichier, on regarde quelles sont les formules de l'ensemble *Current* qui sont vérifiées, et pour celles qui contiennent des opérateurs du futur, on les ajoute à l'ensemble « *Next* » pour pouvoir les examiner à l'état suivant. C'est ce que fait la procédure « *Expand* » à l'étape 3) de l'algorithme. Cette procédure extrait les sous-formules de chaque formule récursivement, stocke leurs implications logiques les concernant sous forme de clauses de Horn dans une matrice $M$ (par exemple, pour une formule F = $F_1$ V $F_2$, on aura les clauses $F_1 \rightarrow$ F et $F_2 \rightarrow$ F, et pour celles qui sont atomiques, si elles sont vérifiées à l'état courant (c'est ce que cherche la procédure « *match* » qui apparaît dans « *Expand* », elle les stocke dans une pile (*Stack*) qui est une pile de représentation de formules. Une fois que toutes les formules ont été expansées à l'état courant, on résoud ce qui peut l'être à l'aide de la matrice et de la pile (c'est ce que fait la procédure « *resolve_matrice* » à l'étape 4) de l'algorithme. Ainsi, grâce aux formules atomiques qui l'étaient et aux clauses, on trouvera mémorisé dans le fichier « *ResForm* » (qui est un ensemble de représentations de formules) toutes les formules qui sont vérifiées.

Ces étapes sont itérées jusqu'à la fin du fichier de « logs » (on le voit à l'étape 4) de l'algorithme). Enfin, quand tout le fichier de « logs » est parcouru, la procédure « Satis » de l'étape 5) compare les formules du fichier *ResForm,* qui sont toutes des formules vérifiées à un certain état mais qui sont des sous-formules de formules du fichier de spécification, et les formules du fichier de spécification, pour pouvoir dire lesquelles sont vérifiées et à quel(s) état(s).

Voici maintenant l'algorithme proprement dit :

1) $i$=ø ;
*Curent*:= ø ;
*Next*:= ø ;
*ResForm* := ø ;

*Stack*:= *pile_vide* ;

*M* = ();

2) *Current* := {*Repr(F, i)| F E F_s*} U *Next* ;

où *Repr(F, i)* est une représentation mémorisée de *F* à l'état *i*

*Next* := ø ;

3) tant que *Current* ≠ ø faire :

soit *f* ∈ *Current* ;

*Current* := *Current*\ {*f*} ;

*Expand*(*f*) ;

4) *resolve_matrice* ;

si *i* <| N|

alors *i* := *i* + 1 ;

aller en 2) ;

sinon aller en 5) ;

5) *Satis* ;

Nous allons maintenant définir les différentes procédures utilisées dans l'algorithme :

**Procédure « *Expand(f)* »,** où *f* est une représentation de formules.

Pour plus de clarté, nous allons présenter cette procédure à l'aide d'un tableau dont nous allons expliquer la signification :

- la colonne *"Formule"* est exactement : *form* (*f*), c'est-à-dire la formule représentée par *f,*
- la colonne *"Current"* (resp. *"Next"*) désigne toutes les représentations de formules qui sont ajoutées à l'ensemble *"Current"* (resp. *"Next"*),
- la colonne *"Clause"* désigne les clauses qui sont stockées dans la matrice avec la procédure *insérer_clause* décrite plus loin,
- les représentations de formules ajoutées à l'ensemble *"Current"* se font à leur tour expanser récursivement,
- les formules atomiques et les formules de la forme ¬ $F_1$ où $F_1$ est une formule atomique, sont traitées séparément : si la formule atomique correspond à l'enregistrement courant (match Irecord) (la procédure « *match* » sera définie plus loin), alors cette formule est vérifiée à l'état *i* ; si la formule atomique $F_1$ ne matche pas le record courant, alors ¬$F_1$ est vérifiée à l'état *i*. Plus formellement :
- Si *form*(*f*) est une formule atomique,
  si *match*(*f*) = TRUE
  alors *Stack* = *Empiler*(*Stack, f*);
- Si *form*(*f*) est de la forme ¬F1, F1 formule atomique,
  soit $f_1$ = *Repr*($F_1$, i) ;
  si *match*($f_1$) = FALSE
  alors *Stack* = *Empiler* (*Stack, f*) ;

| Formule | Current | Next | Clause |
|---|---|---|---|
| $F_1 \wedge F_2$ | $f_1 = Repr(F_1, i)$ <br> $f_2 = Repr(F_2, i)$ | | $f_1 \wedge f_2 \rightarrow f$ |
| $F_1 \vee F_2$ | $f_1 = Repr(F_1, i)$ <br> $f_2 = Repr(F_2, i)$ | | $f_1 \rightarrow f$ <br> $f_2 \rightarrow f$ |
| $OF_1$ | | $f_1 = Repr(F_1, i + 1)$ | $f_1 \rightarrow f$ |
| $OF_1$ | | $f_1 = Repr(F_1, i + 1)$ <br> si $i \neq |N|$ (*) | $f_1 \rightarrow f$ |
| $\diamond F_1$ | $f_1 = Repr(F_1, i)$ | $f_2 = Repr(\diamond F_1, i + 1)$ | $f_1 \rightarrow f$ <br> $f_2 \rightarrow f$ |
| $F_1$ | $f_1 = Repr(F_1, i)$ | $f_2 = Repr(\diamond F_1, i + 1)$ | $f_1 \wedge f_2 \rightarrow f$ |
| $F_1 U F_2$ | $f_1 = Repr(F_1 \wedge O(F_1 U F_2), i)$ <br> $f_2 = Repr(F_2, i)$ | | $f_1 \rightarrow f$ <br> $f_2 \rightarrow f$ |
| $F_1 W F_2$ | $f_1 = Repr(F_1, i)$ <br> $f_2 = Repr(F_1 U F_2, i)$ | | $f_1 \rightarrow f$ <br> $f_2 \rightarrow f$ |

(suite)

| Formule | Current | Next | Clause |
|---|---|---|---|
| $\neg(F_2 \wedge F_3)$ | $f_1 = Repr(\neg F_2 \vee \neg F_3, i)$ | | $f_1 \to f$ |
| $\neg(F_2 \vee F_3)$ | $f_1 = Repr(\neg F_2 \wedge \neg F_3, i)$ | | $f_1 \to f$ |
| $\neg(\neg F_2)$ | $f_1 = Repr(F_2, i)$ | | $f_1 \to f$ |
| $\neg(OF_2)$ | $f_1 = Repr(O(\neg F_2, i)$ | | $f_1 \to f$ |
| $\neg(OF_2)$ | $f_1 = Repr(O(\neg F_2, i)$ | | $f_1 \to f$ |
| $\neg(\diamondsuit F_2)$ | $f_1 = Repr( (\neg F_2, i)$ | | $f_1 \to f$ |
| $\neg(F_2)$ | $f_1 = Repr(\diamondsuit(\neg F_2, i)$ | | $f_1 \to f$ |
| $\neg(F_2 \ U \ F_3)$ | $f_1 = Repr((\neg F_3, i)$ <br> $f_2 = Repr(\neg F_3 \ U \ (\neg F_2, \wedge, F_3), i)$ | | $f_1 \to f$ <br> $f_2 \to f$ |
| $\neg(F_2 \ W \ F_3)$ | $F_1 = Repr((\neg F_3) \ U \ (\neg F_2, \wedge, \Re \Phi_3), i)$ | | $f_1 \to f$ |
| (*) : sinon, c'est-à-dire si $i = |N|$, <br> $f_1 = Repr(F_1, i)$ <br> $Stack = Empiler(Stack, f_1);$ | | | |

**Procédure « match($f$) »,** *où f est une représentation de formules :*
Cas form ($f$):

- si c'est de la forme $\{id_1 = t_1,..., id_n = t_n,...\}$, alors :

  - si $\forall_j$, $1 \leq j \leq n$, $id_j \ \varepsilon \ Dom \ (R_i)$, et match-term $(R_i(id_j), t_j, f)$
  - alors TRUE
  - sinon FALSE

- si c'est de la forme $\{id_1 = t_1,..., id_n = t_n\}$, alors :

  - si $n = |dom(R_i)|$ et j, $1 \leq j \leq n$, $id_j \ \varepsilon \ Dom \ (R_i)$, et match-term $(R_i(id_j), t_i, f)$
  - alors TRUE
  - sinon FALSE

- **Procédure « match-term» (w, t, $f$),** où w, t $\in \Sigma^* \cup V$ et $f$ est une représentation de formule

    cas t :

  - si t est un regex :

    - si Reg (w,t)
    - alors TRUE.
    - sinon FALSE

  - si t est une variable x :
    Notation : $\rho(x)$ est une fonction partielle de l'ensemble des variables $V$ vers l'ensemble des chaînes de caractères $\Sigma^*$

    - si $\rho(x)$ est défini

      - si $\rho(x) = w$
      - alors TRUE

- sinon FALSE

- si ρ(x) n'est pas défini, alors
  Notation : E est l'environnement constitué des couples dont la première composante est prise dans l'ensemble des variables et la deuxième composante dans l'ensemble des chaînes de caractères

  - E: = E ∪ {(x,w)} ;
  - TRUE ;

**Procédure Inserer-clause (H)**, où H est une clause de Horn ayant une ou deux représentations de formules en partie négative :

Notation : Si M est une matrice m x n, m, n ∈ N, notons $m_{i,f}$ l'élément de la $i^{ème}$ ligné indéxé par $f$, et de manière semblable $m_{f,i}$ et $m_{f1,f2}$.
CasH :

- si H est de la forme $f_1 \rightarrow f$, alors

  - s'il existe déjà une colonne de M indiquée par $f_1$

    - alors, ajouter une ligne indicée par f avec $m_{f,f1} = 1$ ;
    - sinon, ajouter une colonne indicée par $f$ et une ligne indicée par $f_1$ avec $m_{f,f1} = 1$ ;

- si H est de la forme $f_1 \, ^\wedge \, f_2$, alors :

  - si ni $f_1$, ni $f_2$ ne sont indice d'aucune colonne de M

    - alors, ajouter 2 colonnes indicées par $f_1$ et $f_2$ et une ligne indicée par $f$ avec $m_{f,f1} = m_{f,f2} = 2$

  - si seulement l'un des $f_i$, i = 1,2 n'est pas indice d'une colonne de m alors :

    - ajouter une colonne indicée par $f_i$ et une ligne indicée par $f$ avec $m_{f,fi} = m_{f,fj} = 2$, où j ∈ {1,2} \ {i}

  - si $f_1$ et $f_2$ sont indices de colonnes de M, alors :

    - ajouter une ligne indicée par $f$ avec $m_{f,f1} = m_{f,f2} = 2$

**Procédure resolve-matrice**

- si Stack = pile-vide, alors rien ;
- sinon soit $f$ : = depiler (Stack) ; $\forall_i$ tel que $m_{i,f}$ est l'élément existe faire :

  - $m_{i,f} = m_{i,f} - 1$ ;
  - $\forall_j$ tel que $m_{i,j}$ existe faire : $m_{i,j} := m_{i,j} - 1$
  - si $m_{i,j} = 0$, alors ;

    - soit $f_1$ l'indice de la ligne $m_{i,f}$
    - si $f_1 \notin$ Res-Form, alors :

      - Stack : = empiler (Stack, $f_1$)
      - Res-form := Res-Form ∪ {$f_1$}

  - suppr ($m_{i,f}$) ;
  - si la $i^{ème}$ ligne la supprimer, si la colonne indicée par $f$ est vide la supprimer

**Satis :**

Tant que Stack ≠ pile- vide faire :

- soit $f_1$ = depiler (Stack) ;
- si $f_1 \in F_s$ alors form ($f$) est vérifiée à l'état etat($f$)

Ainsi, le procédé performant de résolution de spécifications se caractérise en ce qu'il comprend :

a) une étape de formulation des conditions d'audit que l'on veut détecter à l'aide de formules de spécification, exprimant des schémas d'attaque ou d'introduction frauduleuse, ou encore d'anomalies, ceci n'étant pas limitatif, à vérifier par l'examen des enregistrements du fichier compte-rendu du système informatique ;

b) une étape d'expansion par un algorithme des formules en sous-formules;

c) une étape de balayage par un interpréteur consistant à engendrer pour chaque formule expansée à chaque enregistrement des clauses de Horn à résoudre pour détecter si la formule est valide ou non à cet enregistrement, les clauses de Horn exprimant les implications résolvantes des sous-formules pour chaque enregistrement balayé, en clauses positives, c'est-à-dire ne comptant qu'un littéral positif, et en clauses non positives, c'est-à-dire comptant au moins un littéral négatif, lesquels littéraux négatifs forment la partie négative de la clause ;

d) une étape de mémorisation des clauses de Horn positives dans une pile de sous-formules oeuvrées et une étape de mémorisation dans un tableau comportant une représentation de la ou des sous-formules impliquantes constituant la partie négative de la clause et du lien avec la ou les sous-formules impliquées constituant la partie positive de la clause et mémorisation dans un compteur du nombre de formules ou sous-formules présentes dans la partie négative de la clause pour chaque sous-formule impliquée ;

e) une étape de résolution du tableau à partir de chaque clause positive rencontrée pour générer soit un fichier de sortie, soit une action du système informatique ;

f) une étape d'itération des étapes b) à e) jusqu'au parcours complet de tous les enregistrements du fichier compte-rendu.

De même, le procédé se caractérise par le fait que pour la formulation de la spécification, une logique temporelle est utilisée.

Selon une autre particularité, le tableau est matriciel et indexé en colonnes par les indices des formules apparaissant dans la partie négative des clauses de Horn et les lignes sont exactement les clauses de Horn.

Selon une autre particularité, le tableau est représenté sous forme de matrice creuse, les colonnes étant représentées au moyen de listes chaînées et les lignes demeurant implicites, est préférée

Selon une autre particularité, une étape d'optimisation de l'expansion des formules est obtenue par une table de hachage dans le but d'assurer qu'une même formule n'est pas expansée plus d'une fois à chaque enregistrement.

Selon une autre particularité, le fichier compte-rendu n'est parcouru qu'une seule fois du début jusqu'à la fin.

De même, le système informatique comportant des moyens de mémorisation et des moyens d'exécution de programmes permettant la mise en oeuvre du procédé se caractérise en ce que le système comporte :

- un moyen adaptateur permettant de traduire les informations du fichier compte-rendu formulées dans le langage spécifique de la machine en un langage compréhensible d'un moyen interpréteur ;
- le moyen interpréteur recevant les informations de l'adaptateur et recevant la formulation de la spécification dans la logique temporelle en une formule de spécification pour expanser cette formule et remplir le tableau et la pile de sous-formules oeuvrées mémorisées dans une mémoire du système informatique et résultant du balayage du fichier compte-rendu du système informatique;
- un algorithme de traitement de clauses exécuté par le système informatique permettant de résoudre les clauses de Horn utilisant les informations du tableau et de la pile de sous-formules oeuvrées, cet algorithme de traitement de clauses générant un fichier de sortie ou générant une action.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

**ANNEXE**

**Annexe 1**

{op = « connection », result = « failed »,...}
et plus tard {op = « connection », result = « succes »,...}

**Annexe 2**

E1 : {op = « connection », result = « failed « , subject = « machin »}
E2 : {op = « connection », result = « succes », subject = « machin », date = « 14 : 09 : 99 »}
E3 : {op = « exec », result = « succes », object = « emacs », mode = « ex »,
subject = « machin »}

**Annexe 3**

F$\Lambda \diamondsuit$ H où F et H sont des formules atomiques de détection d'évènement exprimée en logique temporelle à partir de formules atomiques.
E1 : {F}
E2 : {H}
E3 : {G}

**Annexe 4**

| ETATS | F | H |
|-------|---|---|
| E1    | 1 | 0 |
| R2    | 0 | 1 |
| R3    | 0 | 0 |

Tables de vérité des formules atomiques

**Annexe 5**

| ETATS | $\diamondsuit$ H | F $\Lambda \diamondsuit$ H |
|-------|------|---------|
| E1    | 1    | 1       |
| E2    | 1    | 0       |
| E3    | 0    | 0       |

Tables de vérité des formules non atomiques

**Annexe 7**

| ETATS | Formules et sous-formules | | | Clauses engendrées |
|---|---|---|---|---|
| E1 | **F** $\Lambda \diamond$ **H** | | $(f_1)$ | |
| | $(f_1)$ : | F | $(f_2)$ | $(f_2)$ |
| | | $\diamond$ H | $(f_3)$ | $(f_2) \Lambda (f_3) \rightarrow (f_1)$ |
| | $(f_3)$ | H | $(f_4)$ | $(f_4) \rightarrow$ FALSE |
| E2 | **F** $\Lambda \diamond$ **H** | | $(f_6)$ | |
| | $(f_3)$ | $\diamond$ H | $(f_7)$ | $(f_7) \rightarrow (f_3)$ |
| | $(f_7)$ : | H | $(f_8)$ | $(f_8)$ |
| | $(f_6)$: | F | $(f_9)$ | $(f_6) \rightarrow (f_7)$ |
| | | | | $(f_6) \rightarrow$ FALSE |
| E3 | **F** $\Lambda \diamond$ **H** | | $(f_{10})$ | |
| | $(f_7)$ | $\diamond$H | $(f_{11})$ | $(f_{11}) \rightarrow (f_7)$ |
| | $(f_{11})$: | H | $(f_{12})$ | $(f_{12}) \rightarrow$ FALSE |
| | $(f_{10})$ : | F | $(f_{13})$ | $(f_{11}) \rightarrow$ FALSE |

**<u>Annexe 6</u>**

| ETATS | Formules et sous-formules | | | Clauses engendrées |
|---|---|---|---|---|
| E1 | **F** $\Lambda \diamond$ **H** | | $(f_1)$ | |
| | $(f_1)$: | F | $(f_2)$ | $(f_2)$ |
| | | $\diamond$ H | $(f_3)$ | $(f_2)$ A $(f_3) \rightarrow (f_1)$ |
| | $(f_3)$: | H V O $(\diamond$ H$)$ | $(f_4)$ | $(f_4) \rightarrow (f_3)$ |
| | $(f_4)$ : | H | $(f_5)$ | $(f_5) \rightarrow (f_4)$ |
| | | | | $(f_5) \rightarrow$ FALSE |
| | | O $(\diamond$ H$)$ | $(f_6)$ | $(f_6) \rightarrow (f_4)$ |
| E2 | **F** $\Lambda \diamond$ **H** | | $(f_7)$ | |
| | $(f_6)$ | $(\diamond$ H$)$ | $(f_8)$ | $(f_8) \rightarrow (f_6)$ |
| | $(f_8)$: | H V O $(\diamond$ H$)$ | $(f_9)$ | $(f_9) \rightarrow (f_8)$ |
| | $(f_9)$: | H | $(f_{10})$ | $(f_{10}) \rightarrow (f_9)$ $(f_{10})$ |
| | | O $(\diamond$ H$)$ | $(f_{11})$ | $(f_{11}) \rightarrow (f_9)$ |
| | $(f_7)$: | $(f_{12})$ | $(f_{12})$ | $(f_{12}) \rightarrow$ FALSE |
| | | $(\diamond$ H$)$ | $(f_{13})$ | $(f_{12})$ $\Lambda$ |
| | $(f_{13})$ : | HVO$(\diamond$ H$)$ $(f_{14})$ | | $(f_{13}) \rightarrow (f_7)$ |
| | $(f_{14})$: | H | $(f_{15})$ | $(f_{14}) \rightarrow (f_{13})$ |
| | | | | $(f_{15}) \rightarrow (f_{14})$ |
| | | | | $(f_{15})$ |
| | | O$(\diamond$ H$)$ | $(f_{16})$ | $(f_{16}) \rightarrow (f_{14})$ |
| E3 | **F** $\Lambda \diamond$ **H** | | $(f_{17})$ | |
| | $(f_{11})$: | $\diamond$ H | $(f_{18})$ | $(f_{18}) \rightarrow (f_{11})$ |
| | $(f_{18})$: | H V O $(\diamond$ H$)$ | $(f_{19})$ | $(f_{19}) \rightarrow (f_{18})$ |
| | $(f_{19})$: | H | $(f_{20})$ | $(f_{20}) \rightarrow (f_{19})$ |
| | | | | $(f_{20}) \rightarrow$ FALSE |
| | | O $(\diamond$ H$)$ | $(f_{21})$ | $(f_{21}) \rightarrow (f_{19})$ |
| | $(f_{16})$: | $(\diamond$ H$)$ | $(f_{22})$ | $(f_{22}) \rightarrow (f_{16})$ |
| | $(f_{22})$: | H V O $(\diamond$ H | $(f_{23})$ | $(f_{23}) \rightarrow (f_{22})$ |
| | $(f_{23})$: | H | $(f_{24})$ | $(f_{24}) \rightarrow (f_{23})$ |
| | | | | $(f_{24}) \rightarrow$ FALSE |
| | | O $(\diamond$ H$)$ | $(f_{25})$ | $(f_{25}) \rightarrow (f_{23})$ |

(suite)

| ETATS | Formules et sous-formules | | | Clauses engendrées |
|---|---|---|---|---|
| | | | | $(f_{25})\to$FALSE |
| | $(f_{17})$ : | F | $(f_{26})$ | $(f_{26})\to$FALSE |
| | | $\diamond$ H | $(f_{27})$ | $(f_{26}) \wedge (f_{27})\to(f_{17})$ |
| | $(f_{27})$ : | H V O ($\diamond$ H) | $(f_{28})$ | $(f_{28})\to(f_{27})$ |
| | $(f_{28})$ | H | $(f_{29})$ | $(f_{29})\to(f_{28})$ |
| | | | | $(f_{29})\to$FALSE |
| | | | | $(f_{30})\to(f_{28})$ |
| | | O ($\diamond$ H) | $(f_{30})$ | $(f_{30})\to$FALSE |

## Revendications

**1.** Procédé de résolution de spécifications, mis en oeuvre par l'intermédiaire d'un système informatique, **caractérisé en ce qu'**il comporte :

a) une étape de formulation des conditions d'audit que l'on veut détecter à l'aide de formules de spécification, exprimant des schémas d'attaque ou d'introduction frauduleuse, ou encore d'anomalies, ceci n'étant pas limitatif, à vérifier par l'examen d'enregistrements du fichier compte-rendu (1) du système informatique ;
b) une étape d'expansion par un algorithme des formules en sous-formules;
c) une étape de balayage par un interpréteur (3) consistant à engendrer pour chaque formule expansée à chaque enregistrement des clauses de Horn à résoudre pour détecter si la formule est valide ou non à cet enregistrement, les clauses de Horn exprimant les implications résolvantes des sous-formules pour chaque enregistrement balayé, en clauses positives, c'est-à-dire ne comptant qu'un littéral positif, et en clauses non positives, c'est-à-dire comptant au moins un littéral négatif, lesquels littéraux négatifs forment la partie négative de la clause ;
d) une étape de mémorisation des clauses de Horn positives dans une pile (18) de sous-formules oeuvrées et une étape de mémorisation dans un tableau (5) comportant une représentation de la ou des sous-formules impliquantes constituant la partie négative de la clause et du lien avec la ou les sous-formules impliquées constituant la partie positive de la clause et mémorisation dans un compteur (7) du nombre de formules ou sous-formules présentes dans la partie négative de la clause pour chaque sous-formule impliquée ;
e) une étape de résolution du tableau (5) à partir de chaque clause positive rencontrée pour générer soit un fichier de sortie(9); soit une action du système informatique ;
f) une étape d'itération des étapes b) à e) jusqu'au parcours complet de tous les enregistrements du fichier compte-rendu (1).

**2.** Procédé selon la revendication 1, **caractérisé par le fait que** pour la formulation de la spécification, une logique temporelle est utilisée.

**3.** Procédé selon la revendication 1, **caractérisé en ce que** le tableau (5) est matriciel et indexé en colonnes par les indices des formules apparaissant dans la partie négative des clauses de Horn et les lignes sont exactement les clauses de Horn.

**4.** Procédé selon la revendication 1, **caractérisé en ce que** le tableau (5) est représenté sous forme de matrice creuse, les colonnes étant représentées au moyen de listes chaînées et les lignes demeurant implicites, est préférée.

**5.** Procédé selon les revendications 1 ou 2, **caractérisé en ce qu'**une étape d'optimisation de l'expansion des formules est obtenue par une table de hachage dans le but d'assurer qu'une même formule n'est pas expansée plus d'une fois à chaque enregistrement.

**6.** Procédé selon la revendication 1, **caractérisé en ce que** le fichier compte-rendu (1) n'est parcouru qu'une seule fois du début jusqu'à la fin.

**7.** Système informatique comportant des moyens de mémorisation et des moyens d'exécution de programmes permettant la mise en oeuvre du procédé selon une des revendications 1 à 6, **caractérisé en ce que** le système

EP 1 085 447 B1

comporte :

- un moyen adaptateur (2) permettant de traduire les informations du fichier compte-rendu (1) formulées dans le langage spécifique de la machine en un langage compréhensible d'un moyen interpréteur (3);
- le moyen interpréteur (3) recevant les informations de l'adaptateur (2) et recevant la formulation de la spécification dans la logique temporelle en une formule de spécification pour expanser cette formule et remplir le tableau (5) et la pile (18) de sous-formules oeuvrées mémorisées dans une mémoire du système informatique et résultant du balayage du fichier compte-rendu (1) du système informatique;
- un algorithme (6) de traitement de clauses exécuté par le système informatique permettant de résoudre les clauses de Horn utilisant les informations du tableau (5) et de la pile (18) de sous-formules oeuvrées, cet algorithme (6) de traitement de clauses générant un fichier de sortie (9) ou générant une action.

**Claims**

1. Specification resolution process, implemented by means of an information-processing system, **characterised in that** it comprises:

   a) a step of formulating the audit conditions that are to be detected using specification formulas, expressing schemas of attack or fraudulent introduction, or anomalies, this list not being restrictive, to be checked by examining the records in the report file (1) of the information-processing system;
   b) a step of expansion, by an algorithm, of the formulas into sub-formulas;
   c) a step of scanning by an interpreter (3) consisting in generating, for each expanded formula, at each record, Horn clauses to be resolved in order to detect whether or not the formula is valid at this record, the Horn clauses expressing the implications resolving the sub-formulas for each scanned record into positive clauses, i.e. involving only one positive literal, and into non-positive clauses, i.e. involving at least one negative literal, which negative literals form the negative part of the clause;
   d) a step of storing the positive Horn clauses in a stack (18) of worked sub-formulas and a step of storing in a table (5) comprising a representation of the implying sub-formula(s) constituting the negative part of the clause and of the link with the implied sub-formulas constituting the positive part of the clause and storing in a counter (7) the number of formulas or sub-formulas present in the negative part of the clause for each implied sub-formula;
   e) a step of resolving the table (5) on the basis of each positive clause encountered in order to generate either an output file (9) or an action of the information-processing system;
   f) a step of iterating steps b) to e) until all the records of the report file (1) have been browsed.

2. Process according to Claim 1, **characterised by** the fact that a temporal logic is used for formulating the specification.

3. Process according to Claim 1, **characterised in that** the table (5) is matrix-type and indexed in columns by the indices of the formulas appearing in the negative part of the Horn clauses and the lines are exactly the Horn clauses.

4. Process according to Claim 1, **characterised in that** the table (5) is represented in the form of a sparse matrix, the columns being represented by means of chained lists and the lines remaining implicit, is preferred

5. Process according to Claims 1 or 2, **characterised in that** a step of optimising the expansion of the formulas is performed by a hash table with the aim of ensuring that any one formula is expanded no more than once at each record.

6. Process according to Claim 1, **characterised in that** the report file (1) is browsed only once from beginning to end.

7. Information-processing system comprising storage means and means for executing programs allowing the process according to one of Claims 1 to 6 to be implemented, **characterised in that** the system comprises:

   - an adapter means (2) allowing the information in the report file (1), formulated in the specific machine language, to be translated into a language understandable by an interpreter means;
   - the interpreter means (3) receiving the information from the adapter (2) and receiving the formulation of the specification in the temporal logic as a specification formula for expanding this formula and filling in the table (5) and the stack (18) of worked sub-formulas stored in a memory of the information-processing system and resulting from the scanning of the report file (1) of the information-processing system;
   - a clause-processing algorithm (6) executed by the information-processing system allowing the Horn clauses to be resolved using the information in the table (5) and the stack (18) of worked sub-formulas, this clause-processing algorithm (6) generating an output file (9) or generating an action.

**Patentansprüche**

1. Verfahren zum Auflösen von Spezifikationen, das durch ein Datenverarbeitungssystem ausgeführt wird, **dadurch gekennzeichnet, dass** es umfasst:

   a) einen Schritt des Formulierens von Prüfbedingungen, die mit Hilfe von Spezifikationsformeln erfasst werden sollen und die Angri ffsschemata oder Schemata für ein betrügerisches Eindringen oder auch Anomalien angeben, ohne darauf beschränkt zu sein, die durch die Untersuchung von Aufzeichnungen der Versuchsdatei (1) des Datenverarbeitungssystems verifiziert werden sollen;
   b) einen Schritt der Expansion von Formeln in Unterformeln durch einen Algorithmus;
   c) einen Schritt des Abtastens durch einen Interpretierer (3), der darin besteht, für jede expandierte Formel bei jeder Aufzeichnung zu zerlegende Horn-Klauseln zu erzeugen, um festzustellen, ob die Formel bei dieser Aufzeichnung gültig ist oder nicht, wobei die Horn-Klauseln die auflösenden Implikationen der Unterformeln für jede abgetastete Aufzeichnung als positive Klauseln, d. h. als Klauseln, die nur ein positives Zeichen enthalten, und als nicht positive Klauseln, d. h. als Klauseln, die wenigstens ein negatives Zeichen enthulten, ausdrücken, wobei diese negativen Zeichen den negativen Teil der Klausel bilden;
   d) einen Schritt des Speicherns der positiven Horn-Klauseln in einem Stapel (18) von bearbeiteten Unterformeln und einen Schritt des Speichenis in einer Tabelle (5), die eine Darstellung der implizierenden Unterformel(n) enthält, die den negativen Teil der Klausel bilden, und der Verbindung mit der bzw. den implizierten Unterformel (n), die den positiven Teil der Klausel bildet bzw. bilden, und des Speicherns in einem Zähler (7) der Anzahl von Formeln oder Unterformeln, die in dem negativen Teil der Klausel für jede implizierte Unterformel vorhanden sind;
   e) einen Schritt des Auflösens der Tabelle (5) ausgehend von jeder angetroffenen positiven Klausel, um entweder eine Ausgabedatei (9) zu erzeugen oder eine Aktion des Datenverarbeitungssystems hervorzurufen;
   f) einen Schritt der Iteration der Schritte b) bis e), bis alle Aufzeichnungen der Versuchsdatei (1) vollständig durchlaufen sind.

2. Verfahren nach Anspruch 1, **dadurch gekennzeichnet, dass** für die Formulierung der Spezifikation eine zeitliche Logik verwendet wird.

3. Verfahren nach Anspruch 1, **dadurch gekennzeichnet, dass** die Tabelle (5) matrixförmig ist und in Spalten durch die Indizes von Formeln indexiert ist, die in dem negativen Teil der Horn-Klauseln auftreten, während die Zeilen exakt die Horn-Klauseln sind.

4. Verfahren nach Anspruch 1, **dadurch gekennzeichnet, dass** die Tabelle (5) in Form einer Sparse-Matrix oder dünn besetzten Matrix gegeben ist, wobei vorzugsweise die Spalten mittels verketteteter Listen repräsentiert werden und die Zeilen implizit bleiben.

5. Verfahren nach den Ansprüchen 1 oder 2, **dadurch gekennzeichnet, dass** ein Schritt der Optimierung der Expansion der Formeln durch eine Zerhackungstabelle mit dem Ziel erhalten wird, sicherzustellen, dass dieselbe Formel bei jeder Aufzeichnung nicht mehr als einmal expandiert wird.

6. Verfahren nach Anspruch 1, **dadurch gekennzeichnet, dass** die Versuchsdatei (1) von Anfang bis Ende nur ein einziges Mal durchlaufen wird.

7. Datenverarbeitungssystem, das Speichermittel und Mittel zum Ausführen von Programmen umfasst, die die Ausführung des Verfahrens nach einem der Ansprüche 1 bis 6 ermöglichen, **dadurch gekennzeichnet, dass** das System umfasst:

   - ein Anpassungsmittel (2), das ermöglicht, die Informationen der Versuchsdatei (1), die in der spezifischen Sprache der Maschine formuliert sind, in eine für ein Interpretierermittel (3) verständliche Sprache zu übersetzen;
   - das Interpretierermittel (3), das die Informationen von dem Anpassungsmittel (2) empfängt und die Formulierung der Spezifikation in der zeitlichen Logik als eine Spezifikationsformel empfängt, um diese Formel zu expandieren und um die Tabelle (5) und den Stapel (18) von bearbeiteten Unterformeln zu füllen, die in einem Speicher des Datenverarbeitungssystems gespeichert sind, und das die Abtastung der Versuchsdatei (1) des Datenverarbeitungssystems zur Folge hat;

- einen Algorithmus (6) für die Verarbeitung von Klauseln, der von dem Datenverarbeitungssystem ausgeführt wird und ermöglicht, die Horn-Klauseln unter Verwendung der Informationen der Tabelle (5) und des Stapels (18) bearbeiteter Unterformeln zu zerlegen, wobei dieser Algorithmus (6) für die Verarbeitung von Klauseln eine Ausgabedatei (9) erzeugt oder eine Aktion hervorruft.

# Figure 1

# figure 2

5

| | $f_2$ | $f_3$ | $f_7$ | $f_8$ | $f_{11}$ |
|---|---|---|---|---|---|
| $f_1$ | • | • | | | |
| $f_3$ | | | • | | |
| $f_7$ | | | | • | |
| $f_7$ | | | | | • |

71  72  73  74  75

| 2 | 2 | 2 | 1 | 0 |
|---|---|---|---|---|
| 1 | 1 | 0 | 0 | 0 |
| 1 | 0 | 0 | 0 | 0 |
| 1 | 1 | 1 | 1 | 1 |

181  182  183  184  185

| $f_8$ | $f_7$ | $f_3$ | | |
|---|---|---|---|---|
| $f_2$ | $f_2$ | $f_2$ | $f_2$ | $f_1$ |